# EUROPEAN PATENT APPLICATION

(11) **EP 4 840 826 A1**
(43) Date of publication of application: **18.11.2026**
(21) Application number: 25880116.6
(22) Date of filing: 18.06.2025
(51) Int. Cl.: C01G 53/82, C01G 53/50, H01M 4/525, H01M 4/505, H01M 4/02

(54) **METHOD FOR PREPARING CATHODE ACTIVE MATERIAL PRECURSOR, CATHODE ACTIVE MATERIAL PRECURSOR, AND METHOD FOR PREPARING CATHODE ACTIVE MATERIAL BY USING CATHODE ACTIVE MATERIAL PRECURSOR**

(30) Priority: 16.10.2024 KR 20240141412
(71) Applicant: EcoPro BM Co., Ltd, Cheongju-si, Chungcheongbuk-do 28116 (KR)
(72) Inventor: PARK, Eun Hee, Cheongju-si, Chungcheongbuk-do 28116 (KR); JUNG, Hyun Su, Cheongju-si, Chungcheongbuk-do 28116 (KR); LIM, Ra Na, Cheongju-si, Chungcheongbuk-do 28116 (KR)
(74) Representative: Prüfer & Partner mbB Patentanwälte · Rechtsanwälte
(86) International application number: PCT/KR2025/008419
(87) International publication number: WO 2026/084170

(57) **Abstract**

The present invention relates to a method of preparing a positive electrode active material precursor that achieves a specific surface area and internal density contributing to an improvement in the capacity characteristics and rate characteristics of a positive electrode active material by controlling the shape and physical properties of the precursor; a positive electrode active material precursor; and a method of preparing a positive electrode active material using the same.

## Description

### BACKGROUND

### 1. Field of the Invention

The present invention relates to a method of preparing a positive electrode active material precursor that achieves a specific surface area and internal density contributing to an improvement in the capacity characteristics and rate characteristics of a positive electrode active material by controlling the shape and physical properties of the precursor; a positive electrode active material precursor; and a method of preparing a positive electrode active material using the same.

### 2. Discussion of Related Art

A battery stores electrical power by using materials capable of an electrochemical reaction at a positive electrode and a negative electrode. As a representative example of such a battery is a lithium secondary battery that stores electrical energy due to a difference in chemical potential generated when lithium ions are intercalated/deintercalated at a positive electrode and a negative electrode.

The lithium secondary battery is manufactured by using a material capable of reversibly intercalating/deintercalating lithium ions as positive electrode and negative electrode active materials, and interposing an organic electrolyte or a polymer electrolyte between the positive electrode and the negative electrode.

A representative material used as a positive electrode active material for a lithium secondary battery is a lithium composite oxide. The lithium composite oxide may be LiCoO₂, LiMn₂O₄, LiNiO₂, LiMnO₂, or an oxide in which Ni, Co, Mn, or Al is composited.

Among these positive electrode active materials, LiCoO₂ is most widely used due to its excellent lifetime characteristics and charge/discharge efficiency, but it has a disadvantage in that its price competitiveness is limited because it is expensive due to the resource limitations of cobalt used as a raw material.

Lithium manganese oxides such as LiMnO₂ and LiMn₂O₄ have excellent thermal stability and low costs, but have low capacity and poor high temperature characteristics. In addition, a LiNiO₂-based positive electrode active material exhibits battery characteristics such as high discharge capacity, but is difficult to synthesize due to a cation mixing problem between Li and a transition metal, and accordingly, causes significant problems in rate characteristics.

In addition, as the severity of such cation mixing increases, a large amount of Li by-products is generated. The Li by-products mostly include LiOH and Li₂CO₃, which may cause gelation during the preparation of a positive electrode paste or generate gas during repeated charging/discharging cycles after the manufacture of an electrode. In addition, residual Li₂CO₃ in the Li by-products increases cell swelling, which may cause lifetime characteristics to deteriorate.

Various candidate materials for overcoming such disadvantages of existing positive electrode active materials have been proposed.

For example, research is being conducted on using a lithium-excess lithium manganese-based oxide, in which Mn among transition metals is included in excess and, at the same time, the content of lithium is greater than the sum of the contents of the transition metals, as a positive electrode active material for a lithium secondary battery. Such a lithium-excess lithium manganese-based oxide is also referred to as an overlithiated layered oxide (OLO).

Although the OLO theoretically has the advantage of exhibiting high capacity under a high-voltage operating environment, it has relatively low electrical conductivity in practice due to the excess Mn included in the oxide, and thus lithium secondary batteries using OLOs have poor rate characteristics. When the rate characteristics are low, the charge/discharge capacity and lifetime efficiency (capacity retention) during cycling of the lithium secondary battery may deteriorate.

In order to solve the above-described problems, research on changing the composition of OLOs has continued, but such attempts have yet to reach a commercialization level.

### SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, lithium secondary batteries using lithium iron phosphate (LFP) have been mainly used to ensure safety and the like, but recently, the use of nickel-based lithium composite oxides, which have a high energy capacity per weight compared to LFP, is increasing.

In addition, recently, nickel-based lithium composite oxides mainly used as positive electrode active materials for high-capacity lithium secondary batteries essentially use ternary metal elements such as nickel, cobalt, and manganese, or nickel, cobalt, and aluminum. However, since cobalt not only has an unstable supply but also is excessively expensive compared to other raw materials, there is a need for a positive electrode active material of a new composition that can reduce the content of cobalt or exclude cobalt.

Under these circumstances, an overlithiated lithium manganese-based oxide can meet the above-mentioned market expectations, but still has a limitation in that its electrochemical characteristics or stability are insufficient to replace a high-Ni type positive electrode active material, such as a commercialized ternary lithium composite oxide with a nickel-cobalt-manganese (NCM) or nickel-cobalt-aluminum (NCA) composition.

For example, it has been described above that an OLO has disadvantages in that its charge/discharge capacity, rate characteristics, and the like are poor due to the characteristics of the material (including excess lithium and manganese).

Therefore, in order to improve the insufficient electrochemical characteristics of OLOs, a method of increasing the size of particles may be considered. However, in general, particles constituting a precursor of an OLO mainly grow into thick plate-like particles, and therefore, as the size of the secondary particles increases, the internal density increases, but this may degrade performance due to low conductivity.

However, depending on the synthesis (co-precipitation reaction) conditions of the precursor of the lithium manganese-based oxide, the shape and physical properties of the precursor can be controlled, and through this, when a positive electrode active material is prepared using a positive electrode active material precursor having an appropriate specific surface area and internal density, it was confirmed by the present inventors that the capacity characteristics and rate characteristics of the positive electrode active material can be improved.

Accordingly, the present invention is directed to providing a method of preparing a positive electrode active material precursor capable of controlling the shape and physical properties of the precursor, which is a reaction product, by adjusting the synthesis (co-precipitation reaction) conditions of the precursor of the lithium manganese-based oxide, and through this, achieving an appropriate specific surface area and internal density of the precursor.

The present invention is also directed to providing a positive electrode active material precursor in which, when prepared by the preparation method defined herein, the surface shape of the primary particles exposed on the surface has a major axis and a minor axis, and an appropriate specific surface area and internal density are achieved.

In addition, the present invention is also directed to providing a positive electrode active material precursor having an appropriate particle size distribution by suppressing or alleviating fine particle formation when prepared by the preparation method defined herein.

Additionally, the present invention is also directed to providing a method of preparing a positive electrode active material using the positive electrode active material precursor.

The objects of the present invention are not limited to the above-mentioned objects, and other unmentioned objects and advantages of the present invention can be understood by the following description and will be more clearly understood by the embodiments of the present invention. In addition, it will be easily understood that the objects and advantages of the present invention can be realized by the means and combinations thereof as set forth in the claims.

In order to solve the above-described technical problems, the present invention provides a method of preparing a positive electrode active material precursor that achieves an appropriate specific surface area and internal density by controlling the shape and physical properties of the precursor, a positive electrode active material precursor, and a method of preparing a positive electrode active material using the same, as described below.
(1) The present invention provides a method of preparing a positive electrode active material precursor, including introducing a transition metal aqueous solution, an ammonium cation complex-forming agent, and a basic aqueous solution into a reactor, and performing a co-precipitation reaction at a pH of greater than 8.0 and less than 10.0 to form a transition metal hydroxide precursor, wherein the content (mol%) of manganese in the transition metal aqueous solution is greater than the content (mol%) of nickel.
(2) The present invention provides the method of preparing a positive electrode active material precursor of (1), wherein the transition metal aqueous solution further includes one or more elements selected from an alkali metal, an alkaline earth metal, a transition metal other than nickel and manganese, a post-transition metal, and a metalloid.
(3) The present invention provides the method of preparing a positive electrode active material precursor of any one of (1) and (2), wherein the transition metal aqueous solution includes 50 mol% or more of manganese based on the total number of moles of transition metals.
(4) The present invention provides the method of preparing a positive electrode active material precursor of any one of (1) to (3), wherein the co-precipitation reaction is performed at a pH of 8.5 to 9.5.
(5) The present invention provides the method of preparing a positive electrode active material precursor of any one of (1) to (4), wherein the co-precipitation reaction is performed under a non-oxidizing atmosphere or an oxidizing atmosphere.
(6) The present invention provides the method of preparing a positive electrode active material precursor of any one of (1) to (5), wherein the co-precipitation reaction is performed under an oxidizing atmosphere including 0.5 vol% or more and less than 6.0 vol% of oxygen.
(7) The present invention provides the method of preparing a positive electrode active material precursor of any one of (1) to (6), wherein the co-precipitation reaction is performed at a temperature of 50 °C or more and less than 80 °C.
(8) The present invention provides a positive electrode active material precursor including a transition metal hydroxide represented by the following Chemical Formula 1, wherein the transition metal hydroxide is in the form of secondary particles in which a plurality of primary particles are aggregated, and the surface shape of the primary particles exposed on the surface of the transition metal hydroxide, as observed from a surface SEM image of the transition metal hydroxide, has a major axis and a minor axis.

   [Chemical Formula 1] [Ni_{b}Co_{c}Mn_{d}M1ₑ](OH)₂

   In Chemical Formula 1,
   M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and
   0≤b<0.5, 0≤c≤0.2, 0.5≤d<0.8, 0<e≤0.1, and b+c+d+e=1.
(9) The present invention provides the positive electrode active material precursor of (8), wherein an average value of a ratio (major axis length/minor axis length) of the major axis length to the minor axis length of the surface shape of the primary particles exposed on the surface of the transition metal hydroxide is 1.5 or more and 25.0 or less.
(10) The present invention provides the positive electrode active material precursor of any one of (8) and (9), wherein an average value of the minor axis length of the surface shape of the primary particles exposed on the surface of the transition metal hydroxide is 30 nm or more and 270 nm or less.
(11) The present invention provides the positive electrode active material precursor of any one of (8) to (10), wherein an average value of the major axis length of the surface shape of the primary particles exposed on the surface of the transition metal hydroxide is 400 nm or more and 2500 nm or less.
(12) The present invention provides the positive electrode active material precursor of any one of (8) to (11), wherein an average particle diameter (D₅₀) of the transition metal hydroxide is 5.0 µm to 24.0 µm, and the span value for the particle diameter of the transition metal hydroxide calculated by the following Equation 1 is 0.90 or less. [Equation 1] $Span value = \left({D}_{90}-{D}_{10}\right) / {D}_{50}$
(13) The present invention provides the positive electrode active material precursor of any one of (8) to (12), wherein the BET specific surface area measured according to a nitrogen adsorption method is 8.0 m²/g to 28.0 m²/g.
(14) The present invention provides the positive electrode active material precursor of any one of (8) to (13), wherein, in an X-ray diffraction spectrum analysis of the positive electrode active material precursor, a ratio (a/b) of a diffraction peak intensity (a) appearing in the 2θ=11.8±1° region to a diffraction peak intensity (b) appearing in the 2θ=18.6±1° region is 0.25 or less.
(15) The present invention provides a method of preparing a positive electrode active material, including: performing first heat treatment on the positive electrode active material precursor according to any one of (8) to (14) to form an oxide precursor; and mixing the oxide precursor with a lithium raw material and performing second heat treatment on the mixture to form a lithium manganese-based oxide in which a phase belonging to the C2/m space group and a phase belonging to the R-3m space group are present as a solid solution.

According to the present invention, it is possible to overcome the limitations of existing lithium-excess lithium manganese-based oxides, which have various disadvantages in terms of electrochemical characteristics and/or stability compared to commercialized ternary lithium composite oxides with nickel-cobalt-manganese (NCM) or nickel-cobalt-aluminum (NCA) compositions.

Specifically, according to the present invention, the shape and physical properties of the precursor can be controlled by adjusting the synthesis (co-precipitation reaction) conditions of the precursor of the lithium manganese-based oxide, and through this, an improvement in the capacity characteristics and rate characteristics of a positive electrode active material prepared using the precursor having an appropriate specific surface area and internal density can be expected.

In addition, the positive electrode active material precursor prepared by the preparation method defined herein has an appropriate particle size distribution by suppressing or mitigating the formation of fine particles, and by suppressing the formation of an impurity phase, an improvement in the capacity characteristics and rate characteristics of a positive electrode active material prepared using the precursor can be expected.

In addition to the above-described effects, specific effects of the present invention will be described below in conjunction with the detailed description for carrying out the invention.

### DETAILED DESCRIPTION OF EXEMPLARY EMBODIMENTS

To understand the present invention more easily, certain terms are defined herein for convenience. Unless otherwise defined herein, scientific and technical terms used herein will have meanings commonly understood by those skilled in the art. In addition, unless specifically designated otherwise in the context, it should be understood that a term in a singular form also includes its plural form, and a term in a plural form also includes its singular form.

The present invention provides a method of preparing a positive electrode active material precursor that achieves an appropriate specific surface area and internal density by controlling the shape and physical properties of the precursor, a positive electrode active material precursor, and a method of preparing a positive electrode active material using the positive electrode active material precursor, and the present invention will be described in more detail below.

### Method of Preparing Positive Electrode Active Material Precursor

According to one aspect of the present invention, a method of preparing a positive electrode active material precursor is provided, the method including introducing a transition metal aqueous solution, an ammonium cation complex-forming agent, and a basic aqueous solution into a reactor, and performing a co-precipitation reaction at a pH of greater than 8.0 and less than 10.0 to form a transition metal hydroxide precursor.

The reactor may be a batch reactor or a continuous reactor, and the method of preparing the positive electrode active material precursor defined herein may be applied regardless of the type of reactor.

The transition metal aqueous solution may be prepared by adding a raw material including a transition metal into deionized water or a mixed solvent including deionized water, or may be prepared by mixing aqueous solutions including a transition metal. The mixed solvent including deionized water may include an organic solvent uniformly mixable with water (for example, alcohol, or the like).

The raw material including the transition metal may be a sulfate, acetate, nitrate, halide, sulfide, hydroxide, oxide, and/or oxyhydroxide including at least one transition metal.

The transition metal aqueous solution may include a nickel-containing raw material and a manganese-containing raw material.

The nickel-containing raw material may be a nickel-containing acetate, nitrate, sulfate, halide, sulfide, hydroxide, oxide, oxyhydroxide, or a combination thereof. For example, the nickel-containing raw material may be Ni(OH)₂, NiO, NiOOH, NiCO₃·2Ni(OH)₂·4H₂O, NiC₂O₄·2H₂O, Ni(NO₃)₂·6H₂O, NiSO₄·6H₂O, a fatty acid nickel salt, a nickel halide, or a combination thereof, but is not limited thereto.

The manganese-containing raw material may be a manganese-containing acetate, nitrate, sulfate, halide, sulfide, hydroxide, oxide, oxyhydroxide, or a combination thereof. For example, the manganese-containing raw material may be a manganese oxide such as Mn₂O₃, MnO₂, or Mn₃O₄; a manganese salt such as MnCO₃, Mn(NO₃)₂·4H₂O, MnSO₄·H₂O, manganese acetate, a manganese dicarboxylate, manganese citrate, or a fatty acid manganese salt; manganese oxyhydroxide; manganese chloride, or a combination thereof, but is not limited thereto.

The transition metal aqueous solution may further include one or more elements selected from an alkali metal, an alkaline earth metal, a transition metal other than nickel and manganese, a post-transition metal, and a metalloid.

The transition metal aqueous solution may optionally include a cobalt-containing raw material.

The cobalt-containing raw material may be a cobalt-containing acetate, nitrate, sulfate, halide, sulfide, hydroxide, oxide, oxyhydroxide, or a combination thereof. For example, the cobalt-containing raw material may be Co(OH)₂, CoOOH, Co(OCOCH₃)₂·4H₂O, Co(NO₃)₂·6H₂O, CoSO₄, CoSO₄·7H₂O, Co(SO₃)₂, or a combination thereof, but is not limited thereto.

The transition metal aqueous solution may optionally include a dopant-containing raw material.

The dopant may be at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd; at least one selected from Al, P, Nb, B, Si, Ti, Zr, Ba, K, Mo, Ca, Mg, W, Ce, V, Ta, and Y; or at least one selected from Al, P, B, Si, Ti, Zr, and W.

The dopant-containing raw material may be included in the transition metal aqueous solution in the form of a sulfate, acetate, nitrate, halide, sulfide, hydroxide, oxide, and/or oxyhydroxide.

The content (mol%) of manganese in the transition metal aqueous solution may be greater than the content (mol%) of nickel. For example, the transition metal aqueous solution may include 50 mol% or more of manganese based on the total number of moles of transition metals.

As described below, in order for a positive electrode active material prepared using the positive electrode active material precursor defined herein to be formed as a solid solution including a phase belonging to the C2/m space group and a phase belonging to the R-3m space group, the content (mol%) of manganese in the transition metal aqueous solution is preferably 50 mol% or more and less than 80 mol%, based on the total number of moles of transition metals.

The ammonium cation complex-forming agent may be, for example, NH₄OH, (NH₄)₂SO₄, NH₄NO₃, NH₄Cl, CH₃COONH₄, NH₄CO₃, or a combination thereof, but is not limited thereto. The ammonium cation complex-forming agent may be used in the form of an aqueous solution. The aqueous solution including the ammonium cation complex-forming agent may be prepared by adding the ammonium cation complex-forming agent into deionized water or a mixed solvent including deionized water.

The basic aqueous solution may be a hydroxide or oxide of an alkali metal or alkaline earth metal, such as NaOH, KOH, or Ca(OH)₂, or a combination thereof. The basic aqueous solution may be used in the form of an aqueous solution. The basic aqueous solution may be prepared by adding a hydroxide or oxide of an alkali metal or alkaline earth metal, or a combination thereof, into deionized water or a mixed solvent including deionized water.

The basic aqueous solution may be used to adjust the pH when the transition metal aqueous solution, the ammonium cation complex-forming agent, and the basic aqueous solution are introduced into the reactor to perform the co-precipitation reaction.

In the present specification, the co-precipitation reaction may be performed at a pH of greater than 8.0 and less than 10.0, a pH of 8.1 or more and 9.9 or less, a pH of 8.2 or more and 9.8 or less, a pH of 8.3 or more and 9.7 or less, a pH of 8.4 or more and 9.6 or less, or a pH of 8.5 or more and 9.5 or less.

Since the pH during the co-precipitation reaction may affect the co-precipitation rate of the transition metal, it is preferable that a constant pH is maintained during the co-precipitation reaction.

When the pH during the co-precipitation reaction is 10.0 or more, because the primary particles constituting the positive electrode active material precursor become thick (i.e., the minor axis length of the primary particles increases), the specific surface area of the positive electrode active material precursor may become excessively small. When the specific surface area of the positive electrode active material precursor is excessively small, the surface kinetic characteristics of a positive electrode active material prepared using the positive electrode active material precursor may be degraded.

When the pH during the co-precipitation reaction is 8.0 or less, due to a decrease in the co-precipitation rate of nickel, the deviation between the content of nickel in the positive electrode active material precursor and a designed composition becomes large, the particle size distribution may become heterogeneous, and fine particles may be excessively formed. As the particle size distribution of the positive electrode active material precursor becomes heterogeneous and the fine particle content increases, the span value and the BET specific surface area calculated from the particle size distribution of the positive electrode active material precursor become large, and the capacity characteristics and rate characteristics of a positive electrode active material prepared using the positive electrode active material precursor may be degraded, particularly, side reactions with an electrolyte may be promoted.

In the present specification, the co-precipitation reaction may be performed under a non-oxidizing atmosphere or an oxidizing atmosphere. As an example, the co-precipitation reaction may be initiated after a non-oxidizing atmosphere is created by purging the reactor with an inert gas such as nitrogen (N₂) or argon (Ar).

As another example, the co-precipitation reaction may be initiated after a non-oxidizing atmosphere is created by purging the reactor with an inert gas such as nitrogen (N₂) or argon (Ar) and then a predetermined oxidizing atmosphere is created by supplying a mixed gas including oxygen (O₂). The mixed gas may be a mixture of oxygen (O₂) and an inert gas (for example, nitrogen (N₂)).

When the co-precipitation reaction is performed under an oxidizing atmosphere, the shape of the primary particles constituting the positive electrode active material precursor may be controlled, and the BET specific surface area may be improved to an appropriate level. Specifically, when the co-precipitation reaction is performed under an oxidizing atmosphere, the internal porosity of the positive electrode active material precursor may be improved to an appropriate level by reducing the major axis length of the primary particles.

In the present specification, the co-precipitation reaction may be performed under an oxidizing atmosphere including 0.5 vol% or more and less than 6.0 vol%, 0.5 vol% or more and 5.0 vol% or less, 0.5 vol% or more and 4.0 vol% or less, or 0.5 vol% or more and less than 3.0 vol% of oxygen (O₂). An oxidizing atmosphere including 0.5 vol% or more and less than 6.0 vol% of oxygen (O₂) may be created by supplying a mixed gas including 0.5 vol% or more and less than 6.0 vol% of oxygen (O₂) into the reactor. The remainder, excluding oxygen, in the mixed gas may be an inert gas (for example, nitrogen (N₂)).

When oxygen (O₂) in the mixed gas supplied into the reactor is 6.0 vol% or more, the primary particles constituting the positive electrode active material precursor become thick, and the proportion of impurity phases in the positive electrode active material precursor may become high.

In the present specification, the co-precipitation reaction may be performed at a temperature of 50 °C or more and less than 80 °C, 50 °C or more and 75 °C or less, or 50 °C or more and 70 °C or less.

When the temperature during the co-precipitation reaction is less than 50 °C, not only is the energy required for the co-precipitation reaction insufficiently supplied, but also the content of impurity phases in the positive electrode active material precursor increases, the overall particle growth may be insufficient, or the internal porosity may become excessively high. On the other hand, when the temperature during the co-precipitation reaction is 80 °C or more, the primary particles constituting the positive electrode active material precursor may become excessively thick. As the primary particles constituting the positive electrode active material precursor become thicker, the internal porosity decreases, and through this, the specific surface area of the precursor may sharply decrease.

The co-precipitation reaction time may vary depending on the particle diameter of the positive electrode active material precursor to be prepared. For example, the co-precipitation reaction may be performed for 5 hours to 120 hours, but is not limited thereto.

After the co-precipitation reaction is completed, a washing and/or drying process may be performed on the positive electrode active material precursor. The washing and drying process may be performed by a method known in the art. For example, the positive electrode active material precursor may be washed with ultrapure water, and dried by a method such as a vacuum drying method, a natural drying method, or a spray drying method.

### Positive Electrode Active Material Precursor

According to another aspect of the present invention, a positive electrode active material precursor including a transition metal hydroxide represented by the following Chemical Formula 1 is provided.

[Chemical Formula 1] [Ni_{b}Co_{c}Mn_{d}M1ₑ](OH)₂

In Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and
0≤b<0.5, 0≤c≤0.2, 0.5≤d<0.8, 0<e≤0.1, and b+c+d+e=1.

The transition metal hydroxide is in the form of secondary particles in which a plurality of primary particles are aggregated, and the surface shape of the primary particles exposed on the surface of the transition metal hydroxide, as observed from a surface SEM image of the transition metal hydroxide, may have a major axis and a minor axis. The surface of the secondary particles corresponds to an aggregate of exposed surfaces of the primary particles located at the outermost periphery of the secondary particles.

Such a shape of the primary particles may be inferred through the surface shape of the primary particles exposed on the surface of the secondary particles observed from a surface SEM image of the secondary particles and a cross-sectional shape of the primary particles observed from a cross-sectional SEM image of the secondary particles.

An average value of a ratio (major axis length/minor axis length) of the major axis length to the minor axis length of the surface shape of the primary particles exposed on the surface of the transition metal hydroxide may be 1.5 or more and 25.0 or less, 2.0 or more and 24.0 or less, 3.0 or more and 23.0 or less, 4.0 or more and 23.0 or less, or 4.7 or more and 22.4 or less.

As a result of the co-precipitation reaction, when the primary particles become excessively thick or excessively small, the average value of the ratio (major axis length/minor axis length) of the major axis length to the minor axis length of the surface shape of the primary particles exposed on the surface of the transition metal hydroxide may be less than 1.5. When the primary particles become excessively thick, electrochemical characteristics may deteriorate because the porosity in the surface of a lithium manganese-based oxide obtained by calcining the transition metal hydroxide decreases and surface kinetics deteriorate. In addition, when the primary particles have an excessively small size, the specific surface area of the lithium manganese-based oxide obtained by calcining the transition metal hydroxide rapidly increases, and side reactions between the lithium manganese-based oxide and the electrolyte may increase.

Meanwhile, when the average value of the ratio (major axis length/minor axis length) of the major axis length to the minor axis length of the surface shape of the primary particles exposed on the surface of the transition metal hydroxide is greater than 25.0, as the number of primary particles having an excessively thin shape increases, the porosity of the lithium manganese-based oxide obtained by calcining the transition metal hydroxide may increase, resulting in a decrease in energy density per unit volume, or the specific surface area may increase, resulting in an increase in side reactions between the lithium manganese-based oxide and the electrolyte.

An average value of the minor axis length of the surface shape of the primary particles exposed on the surface of the transition metal hydroxide may be 30 nm or more and 270 nm or less, 50 nm or more and 270 nm or less, 70 nm or more and 270 nm or less, 80 nm or more and 270 nm or less, or 84 nm or more and 260 nm or less.

When the average value of the minor axis length of the surface shape of the primary particles exposed on the surface of the transition metal hydroxide is less than 30 nm, because the size of the primary particles exposed on the surface of a lithium manganese-based oxide obtained by calcining the transition metal hydroxide becomes excessively small or excessively thin, it may be difficult to reduce side reactions between the lithium manganese-based oxide and the electrolyte.

On the other hand, when the average value of the minor axis length of the surface shape of the primary particles exposed on the surface of the transition metal hydroxide is greater than 270 nm, because the size of the primary particles exposed on the surface of a lithium manganese-based oxide obtained by calcining the transition metal hydroxide becomes excessively large, surface kinetics such as lithium ion conductivity may deteriorate.

An average value of the major axis length of the surface shape of the primary particles exposed on the surface of the transition metal hydroxide may be 400 nm or more and 2500 nm or less, 400 nm or more and 2400 nm or less, 400 nm or more and 2300 nm or less, 500 nm or more and 2300 nm or less, 500 nm or more and 2200 nm or less, 500 nm or more and 2100 nm or less, 600 nm or more and 2000 nm or less, or 600 nm or more and 1900 nm or less.

When the average value of the major axis length of the surface shape of the primary particles exposed on the surface of the transition metal hydroxide is less than 400 nm, because the size of the primary particles exposed on the surface of a lithium manganese-based oxide obtained by calcining the transition metal hydroxide becomes excessively small, it may be difficult to reduce side reactions between the lithium manganese-based oxide and the electrolyte.

On the other hand, when the average value of the major axis length of the surface shape of the primary particles exposed on the surface of the transition metal hydroxide is greater than 2500 nm, because the size of the primary particles exposed on the surface of a lithium manganese-based oxide obtained by calcining the transition metal hydroxide becomes excessively large, surface kinetics such as lithium ion conductivity may deteriorate.

The average particle diameter (D₅₀) of the transition metal hydroxide is 5.0 µm to 24.0 µm, 6.0 µm to 20.0 µm, or 7.0 µm to 15.0 µm.

Meanwhile, the transition metal hydroxide defined herein may be used as a precursor for preparing large particles of a positive electrode active material exhibiting a bimodal particle size distribution or a positive electrode active material exhibiting a trimodal particle size distribution, or may be used as a precursor for preparing medium particles of a positive electrode active material exhibiting a trimodal particle size distribution. The medium particles refer to particles having an average particle diameter between small particles and large particles in a positive electrode active material exhibiting a trimodal particle size distribution.

The average particle diameter (D₅₀) of the transition metal hydroxide for preparing large particles of a positive electrode active material exhibiting a bimodal particle size distribution or a positive electrode active material exhibiting a trimodal particle size distribution may be 5.0 µm to 24.0 µm, 6.0 µm to 20.0 µm, 6.0 µm to 18.0 µm, 6.0 µm to 16.0 µm, or 6.0 µm to 15.0 µm.

The average particle diameter (D₅₀) of the transition metal hydroxide for preparing medium particles of a positive electrode active material exhibiting a trimodal particle size distribution may be 5.0 µm to 15.0 µm, 5.0 µm to 10.0 µm, or 5.0 µm to 8.0 µm.

A span value for the particle diameter of the transition metal hydroxide calculated by the following Equation 1 may be 0.90 or less, or 0.88 or less. [Equation 1] $Span value = \left({D}_{90}-{D}_{10}\right) / {D}_{50}$

When the span value for the particle diameter of the transition metal hydroxide is greater than 0.90, the particle size distribution of the positive electrode active material precursor becomes heterogeneous, and the positive electrode active material precursor may include an excessively large amount of fine particles.

The positive electrode active material precursor may have a BET specific surface area, measured according to a nitrogen adsorption method, of 8.0 m²/g to 28.0 m²/g, 10.0 m²/g to 28.0 m²/g, 11.0 m²/g to 28.0 m²/g, 12.0 m²/g to 27.0 m²/g, or 13.2 m²/g to 26.2 m²/g.

When the BET specific surface area of the positive electrode active material precursor is smaller than 8.0 m²/g, the specific surface area of a lithium manganese-based oxide prepared using the positive electrode active material precursor becomes excessively small, and it may be difficult to improve the capacity characteristics and rate characteristics of a positive electrode active material including the lithium manganese-based oxide. On the other hand, when the BET specific surface area of the positive electrode active material precursor is greater than 28.0 m²/g, the specific surface area of a lithium manganese-based oxide prepared using the positive electrode active material precursor becomes excessively large, and accordingly, the possibility of side reactions between the lithium manganese-based oxide and an electrolyte increases, which may deteriorate the stability of a positive electrode active material including the lithium manganese-based oxide.

In an X-ray diffraction spectrum analysis of the positive electrode active material precursor, the positive electrode active material precursor may have a ratio (a/b) of a diffraction peak intensity (a) appearing in the 2θ=11.8±1° region to a diffraction peak intensity (b) appearing in the 2θ=18.6±1° region of 0.25 or less, 0.20 or less, 0.15 or less, 0.11 or less, 0.105 or less, or 0.103 or less.

During the X-ray diffraction spectrum analysis of the positive electrode active material precursor, the diffraction peak appearing in the 2θ=18.6±1° region is a peak corresponding to [Ni_{b}Co_{c}Mn_{d}M1ₑ](OH)₂ represented by Chemical Formula 1, and the diffraction peak appearing in the 2θ=11.8±1° region is a peak corresponding to an MnO₂ phase.

During the X-ray diffraction spectrum analysis of the positive electrode active material precursor, the fact that the ratio (a/b) of the diffraction peak intensity (a) appearing in the 2θ=11.8±1° region to the diffraction peak intensity (b) appearing in the 2θ=18.6±1° region is greater than 0.25 means that the proportion of the MnO₂ phase, which is an impurity phase, in the positive electrode active material precursor is excessively large. In this case, the capacity characteristics and rate characteristics of a positive electrode active material prepared using the positive electrode active material precursor may deteriorate.

### Method of Preparing Positive Electrode Active Material

According to still another aspect of the present invention, a method of preparing a positive electrode active material using the positive electrode active material precursor defined herein is provided.

According to the present invention, the shape and physical properties of the precursor may be controlled by adjusting the synthesis (co-precipitation reaction) conditions of the precursor of the lithium manganese-based oxide, and through this, the capacity characteristics and rate characteristics of a positive electrode active material prepared using the precursor having an appropriate specific surface area and internal density may be improved.

The method of preparing the positive electrode active material includes a step of first heat-treating the positive electrode active material precursor defined herein (specifically, the transition metal hydroxide represented by Chemical Formula 1) to form an oxide precursor, and a step of mixing the oxide precursor with a lithium raw material and then second heat-treating the mixture to form a lithium manganese-based oxide in which a phase belonging to the C2/m space group and a phase belonging to the R-3m space group are present as a solid solution.

The transition metal hydroxide represented by Chemical Formula 1 may be subjected to first heat treatment at 300 °C to 700 °C, 400 °C to 600 °C, or 450 °C to 550 °C, for 1 hour to 36 hours in a furnace with an air atmosphere, thereby being converted into a precursor in an oxide state.

Subsequently, after the precursor in the oxide state and the lithium raw material are mixed to prepare a mixture, the mixture may be subjected to second heat treatment at 700 °C to 1000 °C, 800 °C to 950 °C, or 850 °C to 950 °C, for 2 hours to 36 hours in a furnace with an O₂ atmosphere to obtain a positive electrode active material including a lithium manganese-based oxide in which a phase belonging to the C2/m space group and a phase belonging to the R-3m space group are present as a solid solution.

As the lithium raw material, a lithium-containing carbonate (for example, Li₂CO₃), a lithium-containing hydrate (for example, lithium hydroxide hydrate (LiOH·H₂O)), a lithium-containing hydroxide (for example, LiOH), a lithium-containing nitrate (for example, lithium nitrate (LiNO₃)), a lithium-containing chloride (for example, lithium chloride (LiCl)), and a combination thereof may be used.

The lithium raw material may be mixed so that a molar ratio of lithium to all metal elements present in the precursor in the oxide state (Li/Metal molar ratio) has a value of greater than 1, 1.1 to 1.6, 1.1 to 1.5, 1.2 to 1.6, or 1.2 to 1.5.

Optionally, before the second heat treatment, a dopant-containing raw material for doping at least one of a phase belonging to the C2/m space group and a phase belonging to the R-3m space group may be further mixed.

The dopant may be at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd; at least one selected from Al, P, Nb, B, Si, Ti, Zr, Ba, K, Mo, Ca, Mg, W, Ce, V, Ta, and Y; or at least one selected from Al, P, B, Si, Ti, Zr, and W.

The dopant-containing raw material may be mixed in the form of a sulfate, acetate, nitrate, halide, sulfide, hydroxide, oxide, and/or oxyhydroxide.

Optionally, before the second heat treatment, a halogen-containing raw material for substituting a portion of oxygen in the lithium manganese-based oxide may be further mixed.

The halogen may be F, Cl, Br, and/or I, and preferably may be F. For halogen doping of the lithium manganese-based oxide, at least one anion dopant selected from LiF, MgF₂, HF, F₂, XeF₂, TbF₄, CeF₄, CoF₃, AgF₂, MoF₃, AgF, CuF₂, FeF₃, CuF, VF₃, CrF₃, ZrF₄, BaF₂, CaF₂, AlF₃, NH₄F, CeF₃, and CsF may be used.

### Positive Electrode Active Material

According to yet another aspect of the present invention, a positive electrode active material including a lithium manganese-based oxide in which a phase belonging to the C2/m space group and a phase belonging to the R-3m space group are present as a solid solution is provided.

The positive electrode active material includes a lithium manganese-based oxide prepared using the positive electrode active material precursor prepared by the method defined herein.

The phase belonging to the C2/m space group and the phase belonging to the R-3m space group may be distinguished not only by the composition constituting each phase, but also by a specific peak for each phase during XRD analysis. For example, a specific peak for the phase belonging to the C2/m space group may appear in the 2θ=20.8±1° region, and a specific peak for the phase belonging to the R-3m space group may appear in the 2θ=18.6±1° region.

The lithium manganese-based oxide is a composite oxide in which a phase belonging to the C2/m space group and a phase belonging to the R-3m space group are present as a solid solution, and in the lithium manganese-based oxide, the phase belonging to the C2/m space group and the phase belonging to the R-3m space group coexist. In addition, the lithium manganese-based oxide is different from a composite oxide having a spinel crystal structure belonging to an Fd-3m space group (for example, LiMn₂O₄ or an oxide having a similar composition).

The lithium manganese-based oxide may be a composite oxide of lithium, nickel, and manganese. In addition, the lithium manganese-based oxide may further include one or more elements selected from an alkali metal, an alkaline earth metal, a transition metal other than nickel and manganese, a post-transition metal, and a metalloid.

The lithium manganese-based oxide is also referred to as a lithium-excess layered oxide (overlithiated layered oxide; OLO) because the number of moles of lithium present in the lithium manganese-based oxide is greater than the sum of the number of moles of other transition metals (generally, this corresponds to a case where a molar ratio of lithium to all metal elements other than lithium in the lithium manganese-based oxide (Li/Metal molar ratio) is greater than 1).

In addition, the lithium manganese-based oxide is also referred to as a lithium- and manganese-excess layered oxide because the content of manganese present in the lithium manganese-based oxide is greater than the content of other transition metals.

In general, considering that a commercialized ternary lithium composite oxide with a nickel-cobalt-manganese (NCM) or nickel-cobalt-aluminum (NCA) composition has a manganese content of 20 mol% or less based on all metal elements excluding lithium, the lithium manganese-based oxide has a relatively high proportion of manganese among all metal elements (for example, 50 mol% or more, 52 mol% or more, 53 mol% or more, or 55 mol% or more) compared to the commercialized ternary lithium composite oxide.

In addition, considering that a commercialized ternary lithium composite oxide with a nickel-cobalt-manganese (NCM) or nickel-cobalt-aluminum (NCA) composition has a nickel content of 60 mol% or more (80 mol% or more in the case of a high-Ni type) based on all metal elements excluding lithium, the lithium manganese-based oxide has a relatively low proportion of nickel among all metal elements (for example, less than 50 mol%, 48 mol% or less, 46 mol% or less, 45 mol% or less, 44 mol% or less, 42 mol% or less, or 40 mol% or less) compared to the commercialized ternary lithium composite oxide.

There is also a difference in that a Li/Metal molar ratio measured from the lithium manganese-based oxide defined herein is greater than that of a ternary lithium composite oxide such as nickel-cobalt-manganese (NCM) or nickel-cobalt-aluminum (NCA). For example, a Li/Metal molar ratio of a ternary lithium composite oxide such as nickel-cobalt-manganese (NCM) or nickel-cobalt-aluminum (NCA) has a value close to 1. On the other hand, a Li/Metal molar ratio of the lithium manganese-based oxide defined herein is greater than 1, and preferably has a value of 1.1 to 1.6, 1.1 to 1.5, 1.2 to 1.6, or 1.2 to 1.5.

Therefore, in the present specification, the lithium manganese-based oxide may be defined as a composite oxide in which the content of manganese among all metal elements excluding lithium is 50 mol% or more, or may be defined as a composite oxide in which the content of manganese among all metal elements excluding lithium is 50 mol% or more and the content of nickel is less than 50 mol%.

In addition, in the present specification, the lithium manganese-based oxide may be defined as a composite oxide in which a molar ratio of lithium to all metal elements excluding lithium is greater than 1, or has a value of 1.1 to 1.6, 1.1 to 1.5, 1.2 to 1.6, or 1.2 to 1.5, and the content of manganese among all metal elements excluding lithium is 50 mol% or more; or may be defined as a composite oxide in which a molar ratio of lithium to all metal elements excluding lithium is greater than 1, or has a value of 1.1 to 1.6, 1.1 to 1.5, 1.2 to 1.6, or 1.2 to 1.5, the content of manganese among all metal elements excluding lithium is 50 mol% or more, and the content of nickel is less than 50 mol%.

Despite the above-described differences in composition, the lithium manganese-based oxide may also serve as a composite metal oxide capable of intercalating/deintercalating lithium ions.

The lithium manganese-based oxide included in the positive electrode active material defined herein may be present as an aggregate in which a plurality of primary particles are aggregated. When the lithium manganese-based oxide is present as an aggregate in which a plurality of primary particles are aggregated, the lithium manganese-based oxide may be referred to as a secondary particle.

The primary particle means a particle unit in which no grain boundary appears when observed at a magnification of 5,000 times to 20,000 times using a scanning electron microscope.

The primary particles constituting the lithium manganese-based oxide defined herein may have an average particle diameter of 0.05 µm to 5 µm, 0.1 µm to 5.0 µm, 0.25 µm to 3.0 µm, or 0.25 µm to 2.0 µm. At this time, as the average particle diameter of the primary particles, an average value ([major axis length+minor axis length]/2) of a length in a major axis direction and a length in a minor axis direction of the primary particles may be used. The average particle diameter of the primary particles may be calculated as an average value of particle diameters of all primary particles observed from a surface SEM image and/or a cross-sectional SEM image of the lithium manganese-based oxide.

When the average particle diameter of the primary particles is smaller than 0.05 µm, the specific surface area of the lithium manganese-based oxide (secondary particles) constituted by the primary particles is relatively large. In this case, the possibility of side reactions occurring between the lithium manganese-based oxide and an electrolyte during storage or operation of a lithium secondary battery may increase.

On the other hand, when the average particle diameter of the primary particles is greater than 5 µm, because the growth of the primary particles is excessively induced, a diffusion path of lithium ions in the primary particles becomes longer. When the diffusion path of lithium ions in the primary particles is excessively long, the mobility of lithium ions in the primary particles and the diffusibility of lithium ions mediated by the primary particles deteriorate, which increases the resistance of the lithium manganese-based oxide (secondary particles) constituted by the primary particles.

Accordingly, in order to reduce the specific surface area of the lithium manganese-based oxide, and at the same time, prevent the mobility of lithium ions in the primary particles and the diffusibility of lithium ions mediated by the primary particles from deteriorating, the average particle diameter of the primary particles may be 0.05 µm to 5 µm, 0.1 µm to 5.0 µm, 0.25 µm to 3.0 µm, or 0.25 µm to 2.0 µm.

The average particle diameter (D₅₀) of the secondary particles may be 5.0 µm to 24.0 µm. The average particle diameter (D₅₀) of the secondary particles may vary depending on the number of primary particles constituting the secondary particles. The average particle diameter of the secondary particles may be measured using a laser diffraction method. For example, after secondary particles are dispersed in a dispersion medium, introduced into a commercially available laser diffraction particle size measuring device (for example, Microtrac MT 3000), and irradiated with ultrasonic waves of about 28 kHz at an output of 60 W, a volume cumulative particle size distribution graph is obtained, and then the average particle diameter may be measured by obtaining a particle size corresponding to 50% of the volume cumulative amount.

For example, the lithium manganese-based oxide defined herein may be used as a positive electrode active material exhibiting a bimodal particle size distribution or a trimodal particle size distribution in order to improve insufficient energy density per unit volume. Accordingly, the lithium manganese-based oxide defined herein may be used as small particles and/or large particles of a positive electrode active material exhibiting a bimodal particle size distribution, or may be used as small particles, medium particles (particles having an average particle diameter between small particles and large particles), and/or large particles of a positive electrode active material exhibiting a trimodal particle size distribution.

When the lithium manganese-based oxide defined herein is used as large particles of a positive electrode active material exhibiting a bimodal particle size distribution or a positive electrode active material exhibiting a trimodal particle size distribution, the average particle diameter (D₅₀) of the secondary particles may be 5.0 µm to 24.0 µm, 6.0 µm to 20.0 µm, 6.0 µm to 18.0 µm, 6.0 µm to 16.0 µm, or 6.0 µm to 15.0 µm.

When the lithium manganese-based oxide defined herein is used as medium particles of a positive electrode active material exhibiting a trimodal particle size distribution, the average particle diameter (D₅₀) of the secondary particles may be 5.0 µm to 15.0 µm, 5.0 µm to 10.0 µm, or 5.0 µm to 8.0 µm.

In the present specification, "particle size" is used interchangeable with "particle diameter," and unless otherwise defined, all "average particle diameters" mean a median volume-based particle diameter determined by a laser diffraction method.

Unless otherwise defined, the term "surface of a primary particle" used herein means an outer surface of the primary particle exposed to the outside. Similarly, the term "surface of a secondary particle" used herein means an outer surface of the secondary particle exposed to the outside. As described above, the "surface of the secondary particle" formed by aggregation of a plurality of primary particles corresponds to the exposed surface of the primary particles present in the surface portion of the secondary particle.

In addition, unless otherwise defined, the term "surface portion of a particle" used herein means a region relatively close to the "outermost surface" of the particle, and the term "center portion of a particle" means a region relatively closer to the "exact center" of the particle than the "surface portion." Accordingly, the "surface portion of a primary particle" means a region relatively close to the "outermost surface" of the primary particle, and the "center portion of a primary particle" means a region relatively closer to the "exact center" of the primary particle than the "surface portion." Similarly, the "surface portion of a secondary particle" means a region relatively close to the "outermost surface" of the secondary particle, and the "center portion of a secondary particle" means a region relatively closer to the "exact center" of the secondary particle than the "surface portion."

At this time, a region excluding the "surface portion of a particle" in any particle may be defined as the "center portion of a particle."

In the present specification, when a radius of the lithium manganese-based oxide measured from a cross-sectional SEM image of the lithium manganese-based oxide is R, a region in which a distance (d) from the center of the lithium manganese-based oxide is (1/2)R<d may be defined as a surface portion, and a region in which a distance (d) from the center of the lithium manganese-based oxide is 0≤d≤(1/2)R may be defined as a center portion. Here, it is assumed that the lithium manganese-based oxide is a secondary particle.

Since the secondary particles may not have a perfect spherical shape, the radius (R) of the secondary particles may be calculated from an average value of the major axis length and the minor axis length of the lithium manganese-based oxide measured from a cross-sectional SEM image of the secondary particles. That is, the radius (R) of the secondary particles may be considered as a value of half of an average value of the major axis length and the minor axis length of the lithium manganese-based oxide measured from a cross-sectional SEM image of the secondary particles.

The lithium manganese-based oxide defined herein may be represented by the following Chemical Formula 2 or Chemical Formula 3.

[Chemical Formula 2] Li(LiₐNi_{b}Co_{c}Mn_{d}M1ₑ)O_{2-f}X_{f}

In Chemical Formula 2,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X is a halogen capable of substituting a portion of the oxygen present in the lithium manganese-based oxide, and
0<a≤0.7, 0≤b<0.5, 0≤c≤0.2, 0.5≤d<0.8, 0<e≤0.1, and 0≤f≤0.1.

   [Chemical Formula 3] rLi₂MnO₃₋ₚXₚ·(1-r)LiᵤNi_{w}CoₓMn_{y}M2_{z}O_{2-p'}X'_{p'}

In Chemical Formula 3,
M2 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd,
X and X' are halogens capable of substituting a portion of the oxygen present in the lithium manganese-based oxide, and
0.2<r≤0.7, 0<u≤1, 0≤w≤1, 0≤x≤0.2, 0.3<y<1, 0<z≤0.1, 0≤p≤0.1, and 0≤p'≤0.1.

In Chemical Formula 2 and Chemical Formula 3, X and X' are each independently a halogen element capable of substituting a portion of the oxygen present in the lithium manganese-based oxide. The type of halogen usable as X and X' may be determined with reference to the periodic table, and F, Cl, Br, and/or I may be used, with F being preferred.

In Chemical Formula 2 and Chemical Formula 3, M1 and M2 may each independently be at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd; at least one selected from Al, P, Nb, B, Si, Ti, Zr, Ba, K, Mo, Ca, Mg, W, Ce, V, Ta, and Y; or at least one selected from Al, P, B, Si, Ti, Zr, and W.

A Li/Metal molar ratio measured from the lithium manganese-based oxide represented by Chemical Formula 2 or Chemical Formula 3 may be greater than 1, 1.1 to 1.6, 1.1 to 1.5, 1.2 to 1.6, or 1.2 to 1.5. The Li/Metal molar ratio measured from the lithium manganese-based oxide must have a value of at least greater than 1 to make it possible to form a lithium-excess lithium manganese-based oxide. In addition, in order for the lithium manganese-based oxide to appropriately form a solid solution in which a phase belonging to the C2/m space group and a phase belonging to the R-3m space group are present as a solid solution, and at the same time, exhibit high capacity under a high-voltage operating environment, it is preferable that the Li/Metal molar ratio of the lithium manganese-based oxide is 1.1 to 1.5, 1.2 to 1.6, or 1.2 to 1.5.

In addition, in order to appropriately form a solid solution in which a phase belonging to the C2/m space group and a phase belonging to the R-3m space group are present as a solid solution, it is preferable that the content of manganese among all metal elements excluding lithium present in the lithium manganese-based oxide represented by Chemical Formula 2 or Chemical Formula 3 is 50 mol% or more.

The content of manganese among all metal elements excluding lithium present in the lithium manganese-based oxide may be 50 mol% or more and less than 80 mol%, 51 mol% or more and less than 80 mol%, 52 mol% or more and less than 80 mol%, 53 mol% or more and less than 80 mol%, 54 mol% or more and less than 80 mol%, 55 mol% or more and less than 80 mol%, 50 mol% or more and 75 mol% or less, 51 mol% or more and 75 mol% or less, 52 mol% or more and 75 mol% or less, 53 mol% or more and 75 mol% or less, 54 mol% or more and 75 mol% or less, or 55 mol% or more and 75 mol% or less, so that the lithium manganese-based oxide can have the characteristics of an OLO exhibiting high capacity under a high-voltage operating environment. When the content of manganese in the lithium manganese-based oxide exceeds 80 mol%, a phase transition may occur according to the movement of transition metals (particularly, manganese) in the lithium manganese-based oxide during the formation and/or operation of a lithium secondary battery. This phase transition forms a spinel phase, and the spinel phase acting as an impurity in the lithium manganese-based oxide may cause a decrease in charge/discharge capacity or voltage decay during the cycling of a lithium secondary battery. In addition, when the content of manganese in the lithium manganese-based oxide exceeds 80 mol%, it may be difficult for a phase belonging to the R-3m space group to be sufficiently generated.

In order to appropriately form a solid solution in which a phase belonging to the C2/m space group and a phase belonging to the R-3m space group are present as a solid solution, the content of nickel among all metal elements excluding lithium present in the lithium manganese-based oxide represented by Chemical Formula 2 or Chemical Formula 3 may be 0 mol% or more and less than 50 mol%, 5 mol% or more and 48 mol% or less, 10 mol% or more and 46 mol% or less, 15 mol% or more and 45 mol% or less, 20 mol% or more and 44 mol% or less, 20 mol% or more and 42 mol% or less, or 20 mol% or more and 40 mol% or less.

When the content of nickel in the lithium manganese-based oxide is 50 mol% or more, it may be difficult to sufficiently form a C2/m phase, or a phase belonging to the C2/m space group and a phase belonging to the R-3m space group may fail to form a sufficient solid solution, causing phase separation during the formation and/or operation of a lithium secondary battery.

The lithium manganese-based oxide represented by Chemical Formula 2 or Chemical Formula 3 may optionally include cobalt. When the lithium manganese-based oxide includes cobalt, the mole fraction of cobalt to the number of moles of all metal elements in the lithium manganese-based oxide may be 20% or less, 15% or less, or 10% or less. In another case, the lithium manganese-based oxide represented by Chemical Formula 2 or Chemical Formula 3 may have a cobalt-free composition that does not include cobalt.

Generally, in a commercialized ternary lithium composite oxide with a nickel-cobalt-manganese (NCM) or nickel-cobalt-aluminum (NCA) composition, a phase belonging to the R-3m space group is present as a single phase.

On the other hand, the lithium-excess lithium manganese-based oxide represented by Chemical Formula 2 or Chemical Formula 3 is present as a composite oxide in which an oxide of a phase belonging to the C2/m space group represented by Li₂MnO₃ (hereinafter referred to as a "C2/m phase") and an oxide of a phase belonging to the R-3m space group represented by LiᵤNi_{w}CoₓMn_{y}M2_{z}O₂ (hereinafter referred to as an "R-3m phase") are present as a solid solution. For example, the lithium manganese-based oxide may be present in a state in which an oxide of a C2/m phase and an oxide of an R-3m phase form a solid solution.

At this time, a composite oxide in a state in which a phase belonging to the C2/m space group and a phase belonging to the R-3m space group are simply physically and/or chemically bonded or attached does not correspond to the solid solution defined herein.

For example, a composite oxide having a phase belonging to the C2/m space group, the surface of which is coated with a metal oxide having a phase belonging to the R-3m space group by mixing a metal oxide having a phase belonging to the C2/m space group and a metal oxide having a phase belonging to the R-3m space group, does not correspond to the solid solution defined herein.

In the lithium manganese-based oxide represented by Chemical Formula 3, when r exceeds 0.7, the proportion of Li₂MnO₃, which is an oxide of a phase belonging to the C2/m space group, in the lithium manganese-based oxide becomes excessively large, and accordingly, the discharge capacity may deteriorate because the irreversible capacity and resistance of the positive electrode active material eventually become large. That is, in order to sufficiently activate an oxide of a phase belonging to the C2/m space group having relatively large resistance in the lithium manganese-based oxide to improve surface kinetics, it is preferable that an oxide of a phase belonging to the R-3m space group is present at a predetermined proportion or more. The ratio of a phase belonging to the C2/m space group and a phase belonging to the R-3m space group in the lithium manganese-based oxide may be calculated through a composition ratio of lithium and transition metals present in the lithium manganese-based oxide.

### Lithium secondary battery

According to another aspect of the present invention, a positive electrode that includes a positive electrode current collector and a positive electrode active material layer formed on the positive electrode current collector may be provided. The positive electrode active material layer may include the lithium manganese-based oxide as a positive electrode active material according to the above-described embodiments of the present invention.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 µm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and optionally as needed, a binder.

Here, the positive electrode active material is included at 80 to 99 wt%, and specifically, 85 to 98.5 wt% with respect to the total weight of a positive electrode slurry for forming the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of a positive electrode slurry for forming the positive electrode active material layer.

The binder serves to improve the adhesion between particles of the positive electrode active material and the adhesion between the positive electrode active material and the current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of a positive electrode slurry for forming the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to manufacture a positive electrode.

In addition, in another exemplary embodiment, the positive electrode may be manufactured by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator and a liquid electrolyte, which are interposed between the positive electrode and the negative electrode. Here, since the positive electrode is the same as described above, for convenience, detailed description of the positive electrode will be omitted, and other components which have not been described above will be described in detail.

The lithium secondary battery may further include a battery case accommodating an electrode assembly of the positive electrode, the negative electrode and the separator, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined coke or copper or stainless steel whose surface is treated with carbon, nickel, titanium or silver, or an aluminum-cadmium alloy. In addition, the negative electrode current collector may generally have a thickness of 3 to 500 µm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and optionally as needed, a binder.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, an Si alloy, an Sn alloy or an Al alloy; a metal oxide capable of doping and dedoping lithium such as SiO_{β} (0<β<2), SnO₂, vanadium oxide, or lithium vanadium oxide; or a composite including the metallic compound and the carbonaceous material such as an Si-C composite or an Sn-C composite, and any one or a mixture of two or more thereof may be used. In addition, as the negative electrode active material, a metallic lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of a negative electrode slurry for forming the negative electrode active material layer.

The binder is a component aiding bonding between a conductive material, an active material and a current collector, and may be generally added at 0.1 to 10 wt% with respect to the total weight of a negative electrode slurry for forming the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene monomer (EPDM), sulfonated EPDM, styrene butadiene rubber, nitrile-butadiene rubber, fluorine rubber, and various copolymers thereof.

The conductive material is a component for further improving the conductivity of the negative electrode active material, and may be added at 10 wt% or less, and preferably, 5 wt% or less with respect to the total weight of a negative electrode slurry for forming the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a conductive powder such as fluorinated carbon, aluminum, or nickel powder; a conductive whisker such as zinc oxide or potassium titanate; a conductive metal oxide such as titanium oxide; or a conductive material such as a polyphenylene or a derivative thereof.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, the separator is not particularly limited as long as it is generally used in a lithium secondary battery to separate a negative electrode from a positive electrode and provide a diffusion path for lithium ions, and particularly, the separator has low resistance to ion mobility of a liquid electrolyte and an excellent electrolyte solution impregnability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the movement of ions involved in an electrochemical reaction of a battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The concentration of the lithium salt is preferably in the range of 0.1 to 2.0M. When the concentration of the lithium salt is included in the above-mentioned range, since the electrolyte has suitable conductivity and viscosity, the electrolyte solution can exhibit excellent electrolytic performance and lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element, (wherein, X is at least one selected from P, As, Sb, Si, Ge, Sn, B, Al, Ga and In) and S may be used. Examples of the sulfide-based solid electrolyte material may include Li₂S-P₂S₅, Li₂S-P₂S-LiX (wherein, X is a halogen element such as I or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (wherein, m and n are integers, and Z is Ge, Zn or Ga), Li₂S-GeS₂, Li₂S-SiS₂-Li₃PO₄, and Li₂S-SiS₂-LiₚMO_{q} (wherein, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include Li₇La₃Zr₂O₁₂, Li₇₋ₓLa₃Zr₁₋ₓNbₓO₁₂, Li₇₋₃ₓLa₃Zr₂AlₓO₁₂, Li₃ₓLa_{2/3-x}TiO₃, Li₁₊ₓAlₓTi₂₋ₓ(PO₄)₃, Li₁₊ₓAlₓGe₂₋ₓ(PO₄)₃, Li₃PO₄, Li₃₊ₓPO₄₋ₓNₓ (LiPON), and Li₂₊₂ₓZn₁₋ₓGeO₄ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance the lifetime characteristics of the battery, inhibit a decrease in battery capacity, and enhance the discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits an excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed to be limited by these examples.

### Preparation Example 1. Preparation of Positive Electrode Active Material Precursor

### Comparative Example 1

Into a 90 L reactor in which a non-oxidizing atmosphere was created by purging nitrogen (N₂) gas, a transition metal aqueous solution having a 2.5 M concentration in which NiSO₄·6H₂O and MnSO₄·H₂O were mixed at a molar ratio of 40:60, a 6.3 M NaOH (aq) solution, and a 7.2 M NH₄OH (aq) solution were introduced while stirring at 400 rpm. The transition metal aqueous solution was introduced into the reactor at 1.1 L/hr, the NaOH (aq) solution was introduced at 0.61 L/hr, and the NH₄OH (aq) solution was introduced at 0.18 L/hr.

The temperature in the reactor was maintained at 50 °C, the pH was maintained at 10.0, and the co-precipitation reaction was performed for 24 hours while supplying nitrogen (N₂) gas into the reactor at 1 L/min.

After completion of the co-precipitation reaction, the precursor was separated, washed with deionized water, and dried at 120 °C for 10 hours to obtain the positive electrode active material precursor.

### Example 1

A positive electrode active material precursor was prepared by performing a co-precipitation reaction in the same manner as in Comparative Example 1, except that the pH in the reactor was maintained at 9.5. The transition metal aqueous solution was introduced into the reactor at 1.1 L/hr, the NaOH (aq) solution was introduced at 0.57 L/hr, and the NH₄OH (aq) solution was introduced at 0.18 L/hr.

### Example 2

A positive electrode active material precursor was prepared by performing a co-precipitation reaction in the same manner as in Comparative Example 1, except that the pH in the reactor was maintained at 9.3. The transition metal aqueous solution was introduced into the reactor at 1.1 L/hr, the NaOH (aq) solution was introduced at 0.55 L/hr, and the NH₄OH (aq) solution was introduced at 0.18 L/hr.

### Example 3

A positive electrode active material precursor was prepared by performing a co-precipitation reaction in the same manner as in Comparative Example 1, except that the pH in the reactor was maintained at 9.0. The transition metal aqueous solution was introduced into the reactor at 1.1 L/hr, the NaOH (aq) solution was introduced at 0.52 L/hr, and the NH₄OH (aq) solution was introduced at 0.18 L/hr.

### Example 4

A positive electrode active material precursor was prepared by performing a co-precipitation reaction in the same manner as in Comparative Example 1, except that the pH in the reactor was maintained at 8.5. The transition metal aqueous solution was introduced into the reactor at 1.1 L/hr, the NaOH (aq) solution was introduced at 0.48 L/hr, and the NH₄OH (aq) solution was introduced at 0.18 L/hr.

### Comparative Example 2

A positive electrode active material precursor was prepared by performing a co-precipitation reaction in the same manner as in Comparative Example 1, except that the pH in the reactor was maintained at 8.0. The transition metal aqueous solution was introduced into the reactor at 1.1 L/hr, the NaOH (aq) solution was introduced at 0.42 L/hr, and the NH₄OH (aq) solution was introduced at 0.18 L/hr.

### Example 5

Into a 90 L reactor in which a non-oxidizing atmosphere was created by purging nitrogen (N₂) gas, a transition metal aqueous solution having a 2.5 M concentration in which NiSO₄·6H₂O and MnSO₄·H₂O were mixed at a molar ratio of 40:60, a 6.3 M NaOH (aq) solution, and a 7.2 M NH₄OH (aq) solution were introduced while stirring at 400 rpm. The transition metal aqueous solution was introduced into the reactor at 1.1 L/hr, the NaOH (aq) solution was introduced at 0.52 L/hr, and the NH₄OH (aq) solution was introduced at 0.18 L/hr.

The temperature in the reactor was maintained at 50 °C, the pH was maintained at 9.0, and the co-precipitation reaction was performed for 24 hours while supplying a mixed gas including nitrogen (N₂) and oxygen (O₂) (including 0.5 vol% of O₂) into the reactor at 0.5 L/min.

After completion of the co-precipitation reaction, the precursor was separated, washed with deionized water, and dried at 120 °C for 10 hours to obtain the positive electrode active material precursor.

### Example 6

A positive electrode active material precursor was prepared by performing a co-precipitation reaction in the same manner as in Example 5, except that a mixed gas including nitrogen (N₂) and oxygen (O₂) (including 1.0 vol% of O₂) was supplied into the reactor at 0.5 L/min.

### Example 7

A positive electrode active material precursor was prepared by performing a co-precipitation reaction in the same manner as in Example 5, except that a mixed gas including nitrogen (N₂) and oxygen (O₂) (including 2.0 vol% of O₂) was supplied into the reactor at 0.5 L/min.

### Example 8

A positive electrode active material precursor was prepared by performing a co-precipitation reaction in the same manner as in Example 5, except that a mixed gas including nitrogen (N₂) and oxygen (O₂) (including 3.0 vol% of O₂) was supplied into the reactor at 0.5 L/min.

### Comparative Example 3

A positive electrode active material precursor was prepared by performing a co-precipitation reaction in the same manner as in Example 5, except that a mixed gas including nitrogen (N₂) and oxygen (O₂) (including 6.0 vol% of O₂) was supplied into the reactor at 0.5 L/min.

### Example 9

Into a 90 L reactor in which a non-oxidizing atmosphere was created by purging nitrogen (N₂) gas, a transition metal aqueous solution having a 2.5 M concentration in which NiSO₄·6H₂O and MnSO₄·H₂O were mixed at a molar ratio of 40:60, a 6.3 M NaOH (aq) solution, and a 7.2 M NH₄OH (aq) solution were introduced while stirring at 400 rpm. The transition metal aqueous solution was introduced into the reactor at 1.1 L/hr, the NaOH (aq) solution was introduced at 0.52 L/hr, and the NH₄OH (aq) solution was introduced at 0.18 L/hr.

The temperature in the reactor was maintained at 60 °C, the pH was maintained at 9.0, and the co-precipitation reaction was performed for 24 hours while supplying a mixed gas including nitrogen (N₂) and oxygen (O₂) (including 1.0 vol% of O₂) into the reactor at 0.5 L/min.

After completion of the co-precipitation reaction, the precursor was separated, washed with deionized water, and dried at 120 °C for 10 hours to obtain the positive electrode active material precursor.

### Example 10

A positive electrode active material precursor was prepared by performing a co-precipitation reaction in the same manner as in Example 9, except that the temperature of the reactor was maintained at 70 °C.

### Comparative Example 4

A positive electrode active material precursor was prepared by performing a co-precipitation reaction in the same manner as in Example 9, except that the temperature of the reactor was maintained at 80 °C.

### Comparative Example 5

A positive electrode active material precursor was prepared by performing a co-precipitation reaction in the same manner as in Example 9, except that the temperature of the reactor was maintained at 45 °C.

### Example 11

A positive electrode active material precursor was prepared by performing a co-precipitation reaction in the same manner as in Example 9, except that the temperature of the reactor was maintained at 70 °C and a mixed gas including nitrogen (N₂) and oxygen (O₂) (including 2.0 vol% of O₂) was supplied into the reactor at 0.5 L/min.

### Preparation Example 2. Preparation of Positive Electrode Active Material

Positive electrode active materials were prepared using each positive electrode active material precursor prepared according to Preparation Example 1.

Specifically, each hydroxide precursor obtained in Preparation Example 1 was heat-treated at 550 °C for 5 hours in a furnace with an air atmosphere and then furnace-cooled to be converted into a precursor in an oxide state.

Subsequently, the precursor in the oxide state and LiOH, which is a lithium raw material (Li/(metal excluding Li) molar ratio = 1.22), were mixed to prepare a mixture.

Subsequently, the mixture was heat-treated at 900 °C for 8 hours in a furnace with an O₂ atmosphere and then furnace-cooled to obtain a positive electrode active material including a lithium manganese-based oxide in which a phase belonging to the C2/m space group and a phase belonging to the R-3m space group are present as a solid solution.

### Preparation Example 3. Manufacture of Lithium Secondary Battery (Half-Cell)

A positive electrode slurry was prepared by dispersing 90 wt% of each positive electrode active material prepared according to Preparation Example 2, 4.5 wt% of carbon black, and 5.5 wt% of a PVDF binder in N-methyl-2-pyrrolidone (NMP). The positive electrode slurry was uniformly applied to an aluminum thin film having a thickness of 15 µm and vacuum-dried at 135 °C to prepare a positive electrode for a lithium secondary battery. A half-cell was manufactured using a lithium foil as a counter electrode for the positive electrode, a porous polyethylene film (Celgard 2300, thickness: 25 µm) as a separator, and an electrolyte prepared by dissolving 1.15 M of LiPF₆ in a mixed solvent of ethylene carbonate, dimethyl carbonate, and ethyl methyl carbonate at a volume ratio of 2:4:4.

### Experimental Example 1. Analysis of Physical Properties and Shape of Positive Electrode Active Material Precursor

The physical properties and shapes of each positive electrode active material precursor prepared according to Preparation Example 1 were analyzed, and the analysis results are shown in Table 1 below.

### (1) Analysis of Particle Size of Positive Electrode Active Material Precursor

The particle size distribution of each positive electrode active material precursor prepared according to Preparation Example 1 was analyzed using a known laser diffraction method. Specifically, after each positive electrode active material precursor was dispersed in a dispersion medium, ultrasonic waves of about 28 kHz were irradiated at an output of 60 W using a commercially available laser diffraction particle size measuring device (Microtrac MT 3000), and then a volume cumulative particle size distribution graph was obtained.

Subsequently, from the volume cumulative particle size distribution graph, a particle size (D10) corresponding to 10% of the volume cumulative amount, a particle size (D₅₀) corresponding to 50% of the volume cumulative amount, and a particle size (D₉₀) corresponding to 90% of the volume cumulative amount were measured. The span value was calculated by the following Equation 1. [Equation 1] $Span value = \left({D}_{90}-{D}_{10}\right) / {D}_{50}$

### (2) Analysis of Particle Shape of Positive Electrode Active Material Precursor

Each positive electrode active material precursor prepared in Preparation Example 1 was photographed with a scanning electron microscope to obtain a surface SEM image of the precursor in the form of secondary particles. By utilizing an image analysis program (Image-Pro image analysis software for SEM), 30% of the primary particles (20 particles) among all primary particles exposed on the surface of the secondary particles observed from the surface SEM image were randomly selected. For the selected primary particles, the major axis length of the surface shape of the primary particles and the minor axis length of the surface shape of the primary particles were measured, and an average value thereof was calculated. In addition, a major axis/minor axis ratio, which is a ratio of the average value of the major axis length of the primary particles to the average value of the minor axis length of the primary particles, was calculated.

### (3) Analysis of BET Specific Surface Area of Positive Electrode Active Material Precursor

The BET specific surface area of each positive electrode active material precursor prepared in Preparation Example 1 was calculated based on the amount of nitrogen gas adsorption at a liquid nitrogen temperature (77K) using a BELSORP-mini II instrument from BEL Japan.

### (4) Analysis of Composition of Positive Electrode Active Material Precursor

The composition (contents of Ni and Mn) of each positive electrode active material precursor prepared according to Preparation Example 1 was analyzed by a known inductively coupled plasma-optical emission spectroscopy (ICP-OES) method.

### (5) XRD Analysis of Positive Electrode Active Material Precursor

X-ray diffraction (XRD) analysis was performed on each positive electrode active material precursor prepared in Preparation Example 1, and the ratio (a/b) of a diffraction peak intensity (a) appearing in the 2θ=11.8±1° region to a diffraction peak intensity (b) appearing in the 2θ=18.6±1° region was calculated. The XRD analysis was performed with a Bruker D8 Advance diffractometer using Cu-Kα radiation (1.540598Å).

**[Table 1]**

| Classificati on | D₅₀ | Span value | Minor axis length (nm) | Major axis length (nm) | Major/ minor axis | Specifi c surfac e area (m²/g) | Ni (mol% ) | Mn (mol% ) | a/b |
|---|---|---|---|---|---|---|---|---|---|
| Comparati ve Example 1 | 12.6 | 0.6 | 646 | 2109 | 3.3 | 6.7 | 39.4 | 60.6 | 0.042 |
| Example 1 | 14.0 | 0.56 | 260 | 1898 | 7.3 | 13.2 | 39.8 | 60.2 | 0.055 |
| Example 2 | 12.1 | 0.55 | 163 | 1850 | 11.3 | 18.1 | 39.3 | 60.7 | 0.069 |
| Example 3 | 12.4 | 0.59 | 84 | 1885 | 22.4 | 20.9 | 39.9 | 60.1 | 0.092 |
| Example 4 | 9.3 | 0.67 | 85 | 1872 | 22.0 | 23.5 | 40.9 | 59.1 | 0.102 |
| Comparati ve Example 2 | 7.4 | 0.93 | 80 | 1780 | 22.3 | 35.2 | 37.5 | 62.5 | 1.403 |
| Example 5 | 7.1 | 0.75 | 85 | 1400 | 16.5 | 18.9 | 39.9 | 60.1 | 0.088 |
| Example 6 | 7.5 | 0.80 | 87 | 1271 | 14.6 | 20.4 | 39.9 | 60.1 | 0.088 |
| Example 7 | 8.1 | 0.88 | 93 | 1015 | 10.9 | 24.1 | 39.8 | 60.2 | 0.103 |
| Example 8 | 9.1 | 0.81 | 110 | 600 | 5.5 | 26.2 | 40 | 60 | 0.101 |
| Comparati ve Example 3 | 12.8 | 0.69 | 141 | 1258 | 8.9 | 26.1 | 40.5 | 59.5 | 0.271 |
| Example 9 | 9.4 | 0.69 | 123 | 1183 | 9.6 | 18.3 | 40.3 | 59.7 | 0.065 |
| Example 10 | 10.8 | 0.65 | 153 | 1126 | 7.4 | 16.8 | 40.6 | 59.4 | 0.062 |
| Comparati ve Example 4 | 12.1 | 0.63 | 271 | 1201 | 4.4 | 12.5 | 40.8 | 59.2 | 0.064 |
| Comparati ve Example 5 | 4.9 | 1.02 | 83 | 1501 | 18.1 | 21.7 | 39.7 | 60.3 | 0.094 |
| Example 11 | 10.3 | 0.62 | 178 | 831 | 4.7 | 19.7 | 40.3 | 59.7 | 0.066 |

Referring to the results of Examples 1 to 4, Comparative Example 1, and Comparative Example 2, it was observed that when the pH during the co-precipitation reaction is excessively high (Comparative Example 1), the primary particles become thick (the minor axis length of the primary particles increases), and consequently, the specific surface area of the positive electrode active material precursor becomes excessively small. In contrast, when the pH is excessively low (Comparative Example 2), the deviation between the nickel content in the precursor and the designed composition is large, and the particle size distribution is nonuniform. Through the high span value of Comparative Example 2, it can be inferred that fine particles were excessively formed due to the excessively low pH. In addition, it was observed that the specific surface area of Comparative Example 2 became excessively large.

Referring to the results of Examples 5 to 8 and Comparative Example 3, it was observed that as a gas mixed with O₂ is supplied during the co-precipitation reaction, the major axis length of the primary particles becomes shorter. As the major axis length of the primary particles becomes shorter, the internal porosity of the precursor increases, and accordingly, the specific surface area can be improved to an appropriate level. However, when the O₂ content in the gas supplied during the co-precipitation reaction becomes excessively large (Comparative Example 3), it was observed that the primary particles become thick again, and the intensity of the diffraction peak appearing in the 2θ=11.8±1° region increases. The diffraction peak appearing in the 2θ=11.8±1° region is a peak corresponding to an MnO₂ phase, and as the intensity of the diffraction peak appearing in a 2θ=11.8±1° region increases, the proportion of impurity phases in the precursor becomes high.

Comparing the results of Example 6 and Examples 9 to 11, through the fact that the span value decreases as the reaction temperature during the co-precipitation reaction increases, it was observed that fine particle formation is suppressed at a relatively high reaction temperature, and a precursor having a uniform particle size distribution can be obtained. In addition, it was observed that the formation of impurity phases can be suppressed as the reaction temperature during the co-precipitation reaction increases. On the other hand, comparing the results of Examples 9 to 11 and Comparative Example 4, it was observed that when the reaction temperature during the co-precipitation reaction becomes excessively high (for example, 80 °C or more), primary particles become excessively thick. As the primary particles become thicker, the internal porosity decreases, and through this, the specific surface area of the precursor may sharply decrease. Meanwhile, referring to the result of Comparative Example 5, it was observed that overall particle growth is insufficient because the reaction temperature during the co-precipitation reaction is low.

### Experimental Example 2. Evaluation of Electrochemical Characteristics of Lithium Secondary Battery (Half-Cell)

For the lithium secondary battery (half-cell) manufactured in Preparation Example 3, the initial charge capacity, initial discharge capacity, initial efficiency, and the 2.0 C/0.1 C discharge capacity ratio (rate capability, C-rate) were measured through a charge/discharge experiment under conditions of a discharge rate of 0.1 C to 5.0 C, 25 °C, and a voltage range of 2.0 V to 4.6 V using an electrochemical analyzer (Toyo, Toscat-3100).

The measurement results are shown in Table 2 below.

**[Table 2]**

| Classification | Charge capacity (mAh/g) | Discharge capacity (mAh/g) | Initial efficiency | 2.0 C/0.1 C discharge capacity ratio (%) |
|---|---|---|---|---|
| Comparative Example 1 | 190.5 | 161.4 | 84.70 | 42.80 |
| Example 1 | 217.4 | 190.4 | 87.60 | 58.10 |
| Example 2 | 219.4 | 193.1 | 88.00 | 63.30 |
| Example 3 | 232.3 | 204.7 | 88.10 | 68.80 |
| Example 4 | 230.2 | 204.7 | 88.90 | 67.20 |
| Comparative Example 2 | 201.2 | 174.8 | 86.90 | 49.10 |
| Example 5 | 248.4 | 221.1 | 89.00 | 72.70 |
| Example 6 | 251.1 | 223.3 | 88.90 | 73.30 |
| Example 7 | 259.2 | 231.1 | 89.20 | 77.80 |
| Example 8 | 257.6 | 229.8 | 89.20 | 77.60 |
| Comparative Example 3 | 210.4 | 184.0 | 87.50 | 54.50 |
| Example 9 | 245.8 | 217.1 | 88.30 | 68.00 |
| Example 10 | 241.1 | 212.3 | 88.00 | 65.30 |
| Comparative Example 4 | 197.1 | 167.8 | 85.10 | 50.80 |
| Comparative Example 5 | 204.0 | 179.8 | 88.20 | 58.00 |
| Example 11 | 249.1 | 220.2 | 88.40 | 75.20 |

Comparing the results of Examples 1 to 4 with those of Comparative Example 1 and Comparative Example 2, it was confirmed that when the pH during the co-precipitation reaction is excessively high (Comparative Example 1) or excessively low (Comparative Example 2), the charge/discharge capacity and the 2.0 C/0.1 C discharge capacity ratio are low. That is, it was demonstrated that using a precursor obtained through a co-precipitation reaction at a pH of greater than 8.0 and less than 10.0, preferably at a pH of 8.5 to 9.5, contributes to the improvement of the charge/discharge capacity and rate characteristics of the prepared positive electrode active material.

Comparing the results of Examples 1 to 4 and Examples 5 to 8, the results indicate that when a gas mixed with O₂ is supplied during the co-precipitation reaction, the charge/discharge capacity and rate characteristics of the positive electrode active material can be further improved. On the other hand, comparing the results of Examples 5 to 8 and Comparative Example 3, it was observed that when the proportion of O₂ in the mixed gas supplied during the co-precipitation reaction becomes excessively large, the charge/discharge capacity and rate characteristics of the positive electrode active material may instead be degraded because excessive changes in the physical properties and shape of the precursor are induced.

Comparing the results of Example 6 and Examples 9 to 11, it can be seen that even when the reaction temperature during the co-precipitation reaction increases, the decrease in charge/discharge capacity and rate characteristics of the positive electrode active material is insignificant. On the other hand, comparing the results of Examples 9 to 11 with those of Comparative Example 4 and Comparative Example 5, it was confirmed that when the reaction temperature during the co-precipitation reaction is higher or lower than an appropriate level, the charge/discharge capacity and rate characteristics of the positive electrode active material may instead be degraded because excessive changes in the physical properties and shape of the precursor are induced.

Although the embodiments of the present invention have been described above, those skilled in the art will appreciate that various modifications, additions, and substitutions are possible without departing from the scope and spirit of the present invention as disclosed in the accompanying claims, and such modifications should be considered to fall within the scope of rights of the present invention.

## Claims

1. A method of preparing a positive electrode active material precursor, comprising introducing a transition metal aqueous solution, an ammonium cation complex-forming agent, and a basic aqueous solution into a reactor, and performing a co-precipitation reaction at a pH of greater than 8.0 and less than 10.0 to form a transition metal hydroxide precursor,
wherein the content (mol%) of manganese in the transition metal aqueous solution is greater than the content (mol%) of nickel.

2. The method of claim 1, wherein the transition metal aqueous solution further includes one or more elements selected from an alkali metal, an alkaline earth metal, a transition metal other than nickel and manganese, a post-transition metal, and a metalloid.

3. The method of claim 1, wherein the transition metal aqueous solution includes 50 mol% or more of manganese, based on the total number of moles of transition metals.

4. The method of claim 1, wherein the co-precipitation reaction is performed at a pH of 8.5 to 9.5.

5. The method of claim 1, wherein the co-precipitation reaction is performed under a non-oxidizing atmosphere or an oxidizing atmosphere.

6. The method of claim 1, wherein the co-precipitation reaction is performed under an oxidizing atmosphere including 0.5 vol% or more and less than 6.0 vol% of oxygen.

7. The method of claim 1, wherein the co-precipitation reaction is performed at a temperature of 50 °C or more and less than 80 °C.

8. A positive electrode active material precursor, comprising a transition metal hydroxide represented by the following Chemical Formula 1,
wherein the transition metal hydroxide is in the form of secondary particles in which a plurality of primary particles are aggregated, and
the surface shape of the primary particles exposed on the surface of the transition metal hydroxide, as observed from a surface SEM image of the transition metal hydroxide, has a major axis and a minor axis:
[Chemical Formula 1] [Ni_{b}Co_{c}Mn_{d}M1ₑ](OH)₂
in Chemical Formula 1,
M1 is at least one selected from Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd, Y, Ru, Ge, and Nd, and
0≤b<0.5, 0≤c≤0.2, 0.5≤d<0.8, 0<e≤0.1, and b+c+d+e=1.

9. The positive electrode active material precursor of claim 8, wherein an average value of a ratio (major axis length/minor axis length) of the major axis length to the minor axis length of the surface shape of the primary particles exposed on the surface of the transition metal hydroxide is 1.5 or more and 25.0 or less.

10. The positive electrode active material precursor of claim 8, wherein an average value of the minor axis length of the surface shape of the primary particles exposed on the surface of the transition metal hydroxide is 30 nm or more and 270 nm or less.

11. The positive electrode active material precursor of claim 8, wherein an average value of the major axis length of the surface shape of the primary particles exposed on the surface of the transition metal hydroxide is 400 nm or more and 2500 nm or less.

12. The positive electrode active material precursor of claim 8, wherein an average particle diameter (D₅₀) of the transition metal hydroxide is 5.0 µm to 24.0 µm, and
the span value for the particle diameter of the transition metal hydroxide calculated by the following Equation 1 is 0.90 or less: [Equation 1] $Span value = \left({D}_{90}-{D}_{10}\right) / {D}_{50}$

13. The positive electrode active material precursor of claim 8, wherein the BET specific surface area measured according to a nitrogen adsorption method is 8.0 m²/g to 28.0 m²/g.

14. The positive electrode active material precursor of claim 8, wherein, in an X-ray diffraction spectrum analysis of the positive electrode active material precursor, a ratio (a/b) of a diffraction peak intensity (a) appearing in the 2θ=11.8±1° region to a diffraction peak intensity (b) appearing in the 2θ=18.6±1° region is 0.25 or less.

15. A method of preparing a positive electrode active material, comprising:
performing first heat treatment on the positive electrode active material precursor of any one of claims 8 to 14 to form an oxide precursor; and
mixing the oxide precursor with a lithium raw material and performing second heat treatment on the mixture to form a lithium manganese-based oxide in which a phase belonging to the C2/m space group and a phase belonging to the R-3m space group are present as a solid solution.
